# EUROPÄISCHE PATENTSCHRIFT

(11) **EP 3 914 471 B1**
(45) Veröffentlichungstag und Bekanntmachung des Hinweises auf die Patenterteilung: **01.05.2024**
(21) Anmeldenummer: 19832297.6
(22) Anmeldetag: 11.12.2019
(51) Int. Cl.: B60L 53/10, B60L 53/30, B60L 5/00, H05F 7/00

(54) **VERFAHREN ZUM LADEN EINER BATTERIE**
METHOD FOR CHARGING A BATTERY
PROCÉDÉ POUR CHARGER UNE BATTERIE

(30) Priorität: 24.01.2019 DE 102019200872
(43) Veröffentlichungstag der Anmeldung: 01.12.2021
(73) Patentinhaber: AUDI AG, 85045 Ingolstadt (DE)
(72) Erfinder: MILOSEV, Zika, 85049 Ingolstadt (DE); DJURIC, Nikola, 74072 Heilbronn (DE)
(86) Internationale Anmeldenummer: PCT/EP2019/084603
(87) Internationale Veröffentlichungsnummer: WO 2020/151872

(56) Entgegenhaltungen:
- DE-A1- 2 941 986
- US-A- 1 119 732
- Movieclips: "Back to the Future (10/10) Movie CLIP - Back to the Future (1985) HD", Youtube, 16. Juni 2011 (2011-06-16), Seite 2 pp., XP054980148, Gefunden im Internet: URL:https://www.youtube.com/watch?v=AM5EYO 5wWMA [gefunden am 2020-01-24]
- Karla Lant: "Stanford Scientists Are Making Wireless Electricity Transmission a Reality", , 16. Juni 2017 (2017-06-16), XP055662094, Gefunden im Internet: URL:https://futurism.com/stanford-scientis ts-are-making-wireless-electricity-transmi ssion-a-reality [gefunden am 2020-01-27]

## Beschreibung

Die Erfindung betrifft ein Verfahren zum Laden einer Batterie eines Fahrzeugs und ein System zum Laden einer Batterie eines Fahrzeugs.

Ein elektrisch angetriebenes Fahrzeug bzw. Elektrofahrzeug erfordert gegenüber einem konventionellen Fahrzeug mit Verbrennungsmotor, in dessen Tank flüssiger Kraftstoff zu füllen ist, eine längere Tank- bzw. Ladedauer, um einer Batterie des elektrisch angetriebenen Fahrzeugs elektrische Energie bereitzustellen. Zur Reduzierung einer gesamten Ladedauer für die Batterie sind unterschiedliche Konzepte denkbar, bei denen die Batterie unter Nutzung von hohen Strömen und/oder hohen Spannungen in kurzer Zeit aufgeladen werden kann. Für derartige Konzepte werden im Sprachgebrauch Begriffe wie Schnellladen oder Ultra-Laden, aber auch weitere Begriffe verwendet. So ist es denkbar, dass eine Aufladung, ähnlich einer Flugzeugbetankung während eines Flugs, während einer Fahrt erfolgen kann, um somit dem Kunden eine unangenehme und längere Ladedauer zu ersparen. Zudem existieren Konzepte, die ein induktives Aufladen vorsehen.

Für einen Kunden bzw. Nutzer eines elektrisch angetriebenen Fahrzeugs kann sich eine Reisedauer durch zeitintensives Aufladen um mindestens 15 Minuten verlängern. Zudem ist eine angemessene Infrastruktur aktuell rudimentär vorhanden, wobei sich ein Ausbau der Infrastruktur noch über Jahre hin erstrecken kann, wodurch die Attraktivität von Elektrofahrzeugen eingeschränkt wird. Fahrzeughersteller sind weiterhin dazu verpflichtet, unterschiedliche Netzspannungen in den jeweiligen Märkten bereitzustellen und Schwankungen zu berücksichtigen.

Die Druckschrift DE 10 2014 118 343 A1 beschreibt eine Vorrichtung für ein Sicherheitssystem eines Fahrzeugs, mit der ein induktiver Ladevorgang eines elektrischen Energiespeichers durchführbar ist.

Ein Verfahren zum Zünden einer explosiven Substanz ist in der Druckschrift US 2011/259181 A1 beschrieben.

Ein Verfahren zum Entladen elektrischer Energie ist aus der Druckschrift US 2014/245916 A1 bekannt.

In dem Film "Back to the Future" bzw. "Zurück in die Zukunft" ist gezeigt, dass während eines Gewitters ein Blitz aus einer Wolke am Himmel in ein Fahrzeug einschlägt, wobei elektrische Energie dieses Blitzes in einem Energiespeicher des Fahrzeugs gespeichert wird.

Das Dokument DE 2 941 986 A1 beschreibt eine Maßnahme zum Ausnutzen von Luftelektrizität zur Energiegewinnung.

Das Dokument "Stanford Scientists Are Making Wireless Electricity Transmission a Reality" zeigt, wie ein elektrisches Fahrzeug bei einer Fahrt auf einer Autobahn drahtlos mit elektrischer Energie versorgt werden soll.

Das Dokument US 1 119 732 zeigt eine Teslaspule.

Vor diesem Hintergrund war es eine Aufgabe, eine Ladezeit zum Laden einer Batterie eines Fahrzeugs zu verkürzen.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen hervor.

Das erfindungsgemäße Verfahren ist zum Laden einer Batterie eines Fahrzeugs mit elektrischer Energie mit einer Ladestation, bspw. aus der Ladestation, vorgesehen. Die dabei verwendete Ladestation weist mindestens eine Quelle zum Erzeugen von elektrischen Blitzen auf. Hierbei wird mit der mindestens einen Quelle mindestens ein Blitz erzeugt, mit dem mindestens einem Empfänger des Fahrzeugs eine Menge an elektrischer Energie über die Luft transportiert und/oder bereitgestellt wird. Der mindestens eine Blitz und/oder die damit transportierte Menge an elektrischer Energie wird bzw. werden von dem mindestens einen Empfänger des Fahrzeugs empfangen. Die dabei von dem mindestens einen Empfänger empfangene Menge an elektrischer Energie wird der Batterie von dem mindestens einen Empfänger bereitgestellt.

Das Verfahren wird in Ausgestaltung bei einer Fahrt des Fahrzeugs, bspw. eines Kraftfahrzeugs bzw. eines Autos, durchgeführt, wenn das Fahrzeug die mindestens eine Quelle passiert bzw. daran vorbeifährt, wobei der mindestens eine Empfänger zu der mindestens einen Quelle maximal einen definierten und/oder definierbaren Sollabstand, insbesondere einen ersten Sollabstand, aufweist. Dabei kann sich das Fahrzeug zu einem Ladezeitpunkt an einem Ladeort bzw. an einer Ladeposition befinden und/oder diesen passieren. Hierbei ist es auch möglich, dass das Fahrzeug zu dem Ladezeitpunkt eine definierte bzw. definierbare maximale Sollgeschwindigkeit relativ zu der Ladestation aufweist.

Weiterhin ist es möglich, dass der Ladestation vor einem Erzeugen des mindestens einen Blitzes von dem Fahrzeug bzw. ausgehend von dem Fahrzeug über eine Kommunikationsverbindung eine Information über die bereitzustellende Menge an elektrischer Energie bereitgestellt wird. Dies kann zu einem Vereinbarungszeitpunkt vor dem Ladezeitpunkt durchgeführt werden, wenn sich das Fahrzeug noch an einem Vereinbarungsort befindet, der zu der mindestens einen Quelle einen größeren Abstand als der Ladeort aufweist.

Falls das Fahrzeug bspw. fährt, ist dies möglich, wenn sich das Fahrzeug der Ladestation nähert und der mindestens eine Empfänger zu der mindestens einen Quelle noch einen Abstand aufweist, der größer, bspw. um ein Vielfaches größer, als der definierbare, insbesondere erste Sollabstand ist. Über die Kommunikationsverbindung und/oder mindestens einen Sensor der Ladestation kann auch ein jeweils aktueller Abstand des Fahrzeugs zu der Ladestation, insbesondere zu der mindestens einen Quelle, ermittelt werden. Weiterhin kann das Fahrzeug, für dessen Batterie eine vorgesehene Menge an elektrischer Energie bereitgestellt werden soll, von der Ladestation identifiziert werden, wenn es sich der mindestens einen Quelle nähert und die mindestens eine Quelle während der Fahrt passiert.

Das erfindungsgemäße System ist zum Laden einer Batterie eines Fahrzeugs mit elektrischer Energie ausgebildet. Das System weist eine Ladestation mit mindestens einer Quelle zum Erzeugen von elektrischen Blitzen auf. Die mindestens eine Quelle ist dazu ausgebildet, mindestens einen Blitz zu erzeugen, der eine Menge an elektrischer Energie über die Luft transportiert und mindestens einem Empfänger des Fahrzeugs diese Menge an elektrischer Energie über die Luft bereitstellt. Der mindestens eine Empfänger ist dazu ausgebildet, den Blitz und somit die Menge an elektrischer Energie zu empfangen und weiterhin die empfangene Menge an elektrischer Energie der Batterie bereitzustellen.

Die mindestens eine Quelle für Blitze ist bspw. als Teslaspule ausgebildet.

Das System weist mindestens einen dem Fahrzeug zugeordneten Empfänger auf, der an einer Außenwand des Fahrzeugs angeordnet und als Antenne, Blitzableiter und/oder Teil einer Karosserie des Fahrzeugs ausgebildet ist.

Außerdem ist es möglich, dass das System mindestens einen Transformator aufweist, der in dem Fahrzeug zwischen dem mindestens einen Empfänger und der Batterie angeordnet, bspw. geschaltet und dazu ausgebildet ist, einen Wert mindestens eines elektrischen Parameters, bspw. eines Stroms bzw. einer Stromstärke und/oder einer Spannung, der von dem mindestens einen Empfänger über den Blitz empfangenen Menge an elektrischer Energie zu transformieren und der Batterie bereitzustellen. Außerdem kann das System einen Puffer für überschüssige elektrische Energie aufweisen. Falls die mit dem mindestens einen Blitz bereitgestellte Menge an elektrischer Energie für eine Speicherkapazität der Batterie zu groß ist, kann überschüssige Energie in einem Kondensator als Puffer gespeichert und später aus dem Kondensator in die Batterie geladen und darin gespeichert werden, wenn die Batterie wieder eine ausreichende Speicherkapazität aufweist.

Es ist denkbar, dass das System ein erstes Kommunikationsmodul, das in dem Fahrzeug angeordnet ist, und ein zweites Kommunikationsmodul, das der Ladestation zugeordnet ist, aufweist. Über die Kommunikationsmodule ist ein Austausch von Informationen über die Menge an bereitzustellender und/oder benötigter elektrischer Energie, aber auch eine Ermittlung eines aktuellen Abstands zwischen der Ladestation, bspw. der mindestens einen Quelle, und dem bspw. fahrenden Fahrzeug bzw. dem mindestens einen Empfänger möglich.

In weiterer Ausgestaltung weist die mindestens eine Quelle der Ladestation zu einer Fahrbahn, bspw. zu einer Mittellinie der Fahrbahn, die von dem Fahrzeug befahrbar ist und/oder befahren wird, maximal einen definierbaren weiteren bzw. zweiten Sollabstand auf, wobei die mindestens eine Quelle neben der Fahrbahn oder, bspw. an einer Infrastruktureinrichtung, über der Fahrbahn angeordnet ist.

Mit dem Verfahren ist ein blitzschnelles Laden der Batterie bzw. ein sog. Flashload möglich. Dabei kann die Batterie bzw. eine Batteriezelle durch sehr hohe elektrische Spannungen, die über Blitze bereitgestellt werden, blitzschnell mit elektrischer Energie geladen werden und die hohen Spannungen aufnehmen. Eine Umsetzung einer vorgesehenen neuen Batterietechnologie ist mit dem Verfahren und dem System für ein Fahrzeug, bspw. ein Land-, Wasser- oder Flug- bzw. Luftfahrzeug, möglich. Im Fall eines Landfahrzeugs kann ein von dem Landfahrzeug befahrbarer Fahrweg als Untergrund von einer brücken- oder tunnelähnlichen Anordnung, bspw. einer bereits bestehenden Infrastruktur, überbrückt sein, an der die Quelle, z. B. die Teslaspule, zur Erzeugung eines künstlicher Blitze installiert ist. Eine weitere Möglichkeit besteht darin, auf eine tunnelähnliche Anordnung zu verzichten, und die Quelle für die Blitze am Rand des Fahrwegs bzw. der Fahrbahn aufzustellen. Durch eine Car-2-X-Kommunikation über die Kommunikationsmodule des Fahrzeugs und der Ladestation kann die Ladestation einen Ladezustand einer Batterie eines sich nähernden Fahrzeugs erfassen und/oder ermitteln und eine möglich Notwendigkeit zum Laden der Batterie erfassen und/oder ermitteln. Das Fahrzeug kann beim Passieren der Ladestation und somit der Quelle einen von der Quelle erzeugten elektrischen Blitz aufnehmen.

Der mindestens eine Empfänger kann als Antenne ausgebildet sein, die am Fahrzeug, bspw. an einer Außenwand, bspw. einem Dach, befestigt ist. Alternativ oder ergänzend kann der mindestens eine Empfänger über eine Fahrzeugfläche und/oder über die Außenwand, bspw. eine Karosserie, des Fahrzeugs analog einem Faraday'schen Käfig mit einem Blitzableiter realisiert sein, wobei die Batterie über den mindestens einen Empfänger mit der elektrischen Energie, die über den Blitz bereitgestellt wird, geladen wird.

Eine Bezahlung der über den Blitz bereitgestellten elektrischen Energie kann automatisch durchgeführt werden, wobei für das Aufladen z. B. eine Flatrate oder ein Aufladen "on Demand" bzw. auf Abruf möglich ist.

Somit kann das Aufladen der Batterie des elektrisch angetriebenen Fahrzeugs während der Fahrt durchgeführt werden. Investitionen für eine erforderliche Infrastruktur, bspw. eine Ladestation, können deutlich reduziert werden, da eine Anzahl an Ladesäulen zum kabelgebundenen Versorgen einer Anzahl an Fahrzeugen, gegenüber einer Anzahl an Quellen, bspw. Blitzspulen, zum Bereitstellen von Blitzen für dieselbe Anzahl an Fahrzeuge deutlich höher ist. Mit dem Verfahren und dem System kann eine Attraktivität von Elektrofahrzeugen deutlich zunehmen, da Kunden für das Aufladen keine Zeit verlieren.

Mit dem Verfahren ist ein Laden der Batterie während der Fahrt bzw. während eines Fahrtzustands des Fahrzeugs ohne Einschränkungen für einen Fahrer des Fahrzeugs möglich, da er hierdurch zeitlich nicht eingeschränkt wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung ein erstes Beispiel für ein Fahrzeug mit einer Batterie, für die eine erste Ausführungsform des erfindungsgemäßen Verfahrens durchgeführt wird, aus unterschiedlichen Perspektiven.
Figur 2 zeigt in schematischer Darstellung ein Beispiel für eine Quelle zum Erzeugen von elektrischen Blitzen als Komponente einer ersten Ausführungsform des erfindungsgemäßen Systems.
Figur 3 zeigt in schematischer Darstellung eine zweite Ausführungsform des erfindungsgemäßen Systems zur Durchführung einer zweiten Ausführungsform des erfindungsgemäßen Verfahrens.

Die Figuren werden zusammenhängend und übergreifend beschrieben, gleichen Bezugszeichen sind dieselben Komponenten zugeordnet.

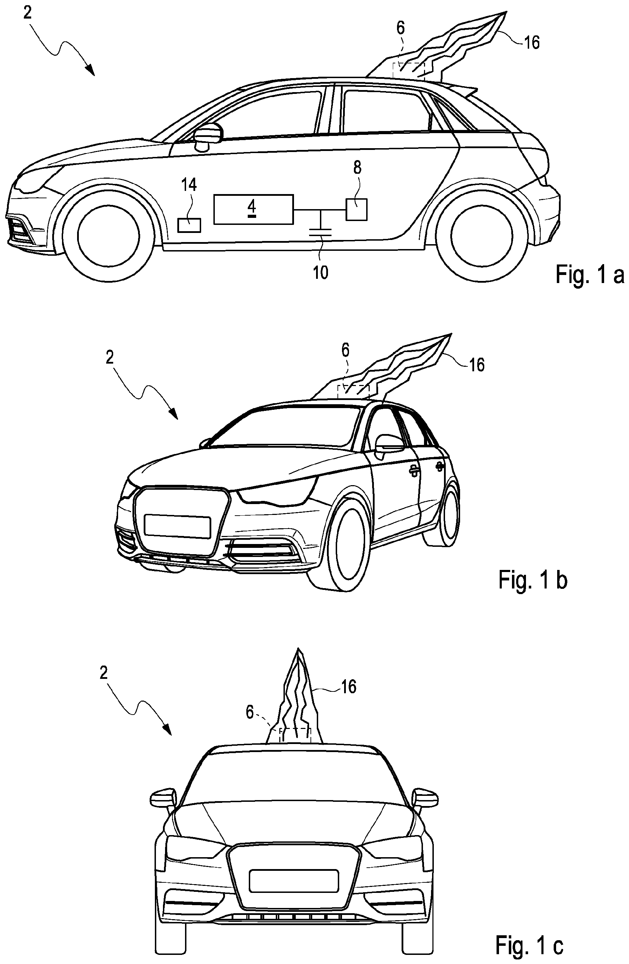

Die Figuren 1a, 1b und 1c zeigen das erste Beispiel für ein Fahrzeug 2 aus unterschiedlichen Perspektiven. Dieses hier als Kraftfahrzeug ausgebildete Fahrzeug 2 wird elektrisch angetrieben und weist eine Batterie 4 auf, in der elektrische Energie gespeichert wird, die von einer Elektromaschine des Fahrzeugs 2 in mechanische Energie umgewandelt wird, wobei das Fahrzeug 2 angetrieben wird. Auf einem Dach und somit auf einer Außenwand des Fahrzeugs 2 ist hier ein schematisch dargestellter Empfänger 6 für elektrische Blitze 16 angeordnet. Weiterhin weist das Fahrzeug 2 noch einen Transformator 8, einen Kondensator 10 als elektrischen Puffer und ein Steuergerät 14 auf.

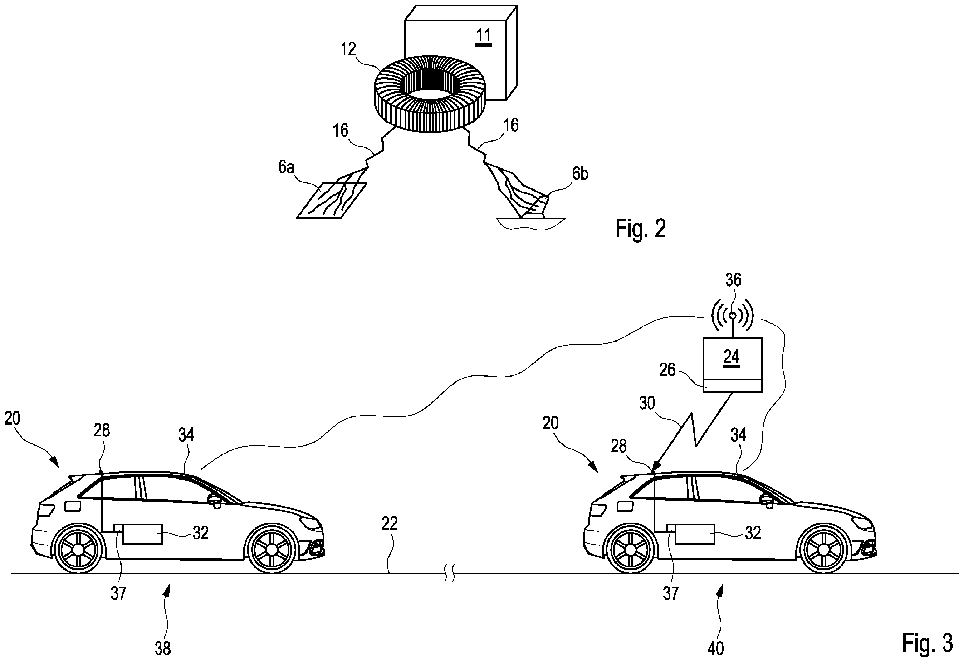

Der Empfänger 6, der Transformator 8, der Kondensator 10 und das Steuergerät 14 des Fahrzeugs 2 sind hier auch als Komponenten der ersten Ausführungsform des erfindungsgemäßen Systems ausgebildet. Zwei Varianten des Empfängers 6a, 6b sind in Figur 2 schematisch dargestellt. In Figur 2 sind weiterhin eine Ladestation 11 mit einer als Teslaspule ausgebildeten Quelle 12 zum Erzeugen von Blitzen 16 dargestellt, die hier als weitere Komponente der ersten Ausführungsform des Systems ausgebildet sind. Eine erste Variante des Empfängers 6a ist hier als flache Antenne ausgebildet, die in die Außenwand, bspw. eine Karosserie, des Fahrzeugs 2 integriert ist. Die zweite Variante des Empfängers 6b ist hier als trapezförmige Antenne, bspw. als trapezförmiger Blitzableiter, ausgebildet, die bzw. der bspw. auf einem Dach des Fahrzeugs 2 anordenbar ist.

Bei der ersten Ausführungsform des erfindungsgemäßen Verfahrens wird der Batterie 4 des Fahrzeugs 2 während einer Fahrt des Fahrzeugs 2 von der Quelle 12 eine Menge an elektrischer Energie bereitgestellt. Falls während einer Fahrt des Fahrzeugs 2 mit dem Steuergerät 14 ermittelt wird, dass die Batterie 4 aufzuladen ist, nimmt hier das Steuergerät 14 des Fahrzeugs 2 mit der Ladestation 11 der ersten Ausführungsform des Systems, die auch die Quelle 12 für die Blitze 16 aufweist, Kontakt auf. Dabei wird der Ladestation 11 mitgeteilt, wieviel elektrische Energie von der Batterie 4 benötigt wird. Weiterhin wird zwischen dem Steuergerät 14 und der Ladestation 11 ein Ladezeitpunkt vereinbart, zu dem der Empfänger 6 und die Quelle 10 voraussichtlich maximal einen Sollabstand zueinander aufweisen. Dieser Ladezeitpunkt hängt zu einem jeweils aktuellen Zeitpunkt von mindestens einem aktuellen kinematischen Parameter des Fahrzeugs 2, bspw. von seinem aktuellen Ort bzw. seiner aktuellen Position und somit von einem aktuellen Abstand zwischen dem Empfänger 6 und der Quelle 10 bzw. einem Ort der Quelle 10, einer aktuellen Geschwindigkeit und/oder Beschleunigung des Fahrzeugs 2 ab. Dabei ist es möglich, dass der Ladezeitpunkt während der Fahrt aktualisiert und angepasst wird.

Sobald der Empfänger 6 und die Quelle 12 zu dem Ladezeitpunkt, wenn das Fahrzeug 2 an der Ladestation 11 vorbeifährt, höchstens den Sollabstand zueinander aufweisen, wird von der Quelle 12 ein elektrischer Blitz 16 erzeugt und zu dem sich bewegenden Empfänger 6 gesendet. Dabei umfasst und/oder transportiert der Blitz 16 die vereinbarte Menge an elektrischer Energie. Außerdem wird von der Ladestation 11 mindestens ein elektrischer Parameter, d. h. eine Spannung und/oder ein Strom, für den Blitz 16 eingestellt.

Der gesendete Blitz 16 wird von dem Empfänger 6 empfangen, die Spannung und/oder der Strom als mindestens ein elektrischer Parameter des Blitzes 16 wird von dem Transformator 8 angepasst, wobei die elektrische Energie des Blitzes 16 an die Batterie 4 angepasst und zu dieser übertragen wird. Falls die bereitgestellte Menge an elektrischer Energie zu groß sein sollte, kann überschüssige elektrische Energie in den Kondensator 10 geladen und somit in diesem zwischengespeichert werden, wobei diese elektrische Energie zu einem späteren Zeitpunkt von dem Kondensator 10 an die Batterie 4 übertragen wird.

Figur 3 zeigt das zweite Beispiel des Fahrzeugs 20 zu einem ersten Zeitpunkt an einem ersten Ort bzw. an einer ersten Position und einem zweiten Zeitpunkt nach dem ersten Zeitpunkt an einem zweiten Ort bzw. an einer zweiten Position während einer Fahrt auf einem Untergrund bzw. auf einer Fahrbahn 22, wobei sich das Fahrzeug 20 ab dem ersten Zeitpunkt einer Ladestation 24 der zweiten Ausführungsform des erfindungsgemäßen Systems nähert, die eine Quelle 26 für elektrische Blitze 30 aufweist. Dabei weist das Fahrzeug 20 an seiner Außenwand hier einen als Blitzableiter ausgebildeten Empfänger 28 für Blitze 30 und eine elektrische Batterie 32 auf, die dazu ausgebildet ist, elektrische Energie zum Fortbewegen des Fahrzeugs 20 bereitzustellen. Außerdem weist sowohl das Fahrzeug 20 als auch die Ladestation 24 jeweils ein Kommunikationsmodul 34, 36 auf, wobei das Fahrzeug 20 und die Ladestation 24 über die Kommunikationsmodule 34, 36, die über Funk Signale austauschen, kommunizieren.

Dabei befindet sich das Fahrzeug 20 zu dem ersten Zeitpunkt, hier einem Vereinbarungszeitpunkt, auf der Fahrbahn 22 an einem Vereinbarungsort 38 als erstem Ort. Der zweite Ort auf der Fahrbahn 22 ist als Ladeort 40 ausgebildet und/oder zu bezeichnen, an dem der Empfänger 28 des Fahrzeugs 20 zu der Quelle 26 der Ladestation maximal einen definierten Sollabstand aufweist. Zu dem Vereinbarungszeitpunkt wird von dem am Vereinbarungsort 38 bzw. an einer Vereinbarungsposition befindlichen Fahrzeug 20 bei der Ladestation 24 eine Menge an elektrischer Energie angefordert, die von der Batterie 32 benötigt wird. Außerdem wird unter Berücksichtigung mindestens eines kinematischen Parameters des Fahrzeugs 20 als zweiter Zeitpunkt ein Ladezeitpunkt vereinbart, zu dem der Empfänger 28 des Fahrzeugs 20 während einer Fortsetzung seiner Fahrt an dem Ladeort 40 maximal den Sollabstand zu der Quelle 26 aufweisen wird, wobei der Ladezeitpunkt laufend aktualisiert werden kann. Sobald das Fahrzeug 20 zu dem vorgesehenen Ladezeitpunkt den Ladeort 40 bzw. eine Ladeposition erreicht und der Empfänger 28 maximal den Sollabstand zu der Quelle 26 aufweist, wird von der Quelle 26 ein Blitz 30 mit der vereinbarten Menge an elektrischer Energie erzeugt, zu dem Empfänger 28 über die Luft transportiert bzw. gesendet und von dem Empfänger 28 empfangen. Außerdem wird mindestens ein elektrischer Parameter des Blitzes 30 von einem Transformator 37 an mindestens einen elektrischen Parameter der Batterie 32 angepasst und die Menge elektrischer Energie des Blitzes 30 der Batterie 32 bereitgestellt.

In Ausgestaltung des Verfahrens werden die kinematischen Parameter des Fahrzeugs, bspw. dessen Ort oder Geschwindigkeit, und die elektrischen Parameter des Blitzes, bspw. dessen Strom und Spannung, berücksichtigt. Hierbei können auch Grenzwerte der jeweiligen Parameter beachtet werden.

### BEZUGSZEICHEN:

- 2: Fahrzeug
- 4: Batterie
- 6, 6a, 6b: Empfänger
- 8: Transformator
- 10: Kondensator
- 11: Ladestation
- 12: Quelle
- 14: Steuergerät
- 16: Blitz
- 20: Fahrzeug
- 22: Fahrbahn
- 24: Ladestation
- 26: Quelle
- 28: Empfänger
- 30: Blitz
- 32: Batterie
- 34, 36: Kommunikationsmodul
- 37: Transformator
- 38: Vereinbarungsort
- 40: Ladeort

## Patentansprüche

1. Verfahren zum Laden einer Batterie (4, 32) eines Fahrzeugs (2, 20) mit elektrischer Energie mit einer Ladestation (11, 24), die mindestens eine Quelle (12, 26) zum Erzeugen von elektrischen Blitzen (16, 30) aufweist, wobei mit der mindestens einen Quelle (12, 26) mindestens ein Blitz (16, 30) erzeugt wird, mit dem mindestens einem Empfänger (6, 6a, 6b, 28) des Fahrzeugs (2, 20) eine Menge an elektrischer Energie über die Luft bereitgestellt wird, wobei die empfangene Menge an elektrischer Energie der Batterie (4, 32) von dem mindestens einen Empfänger (6, 6a, 6b, 28) bereitgestellt wird, **dadurch gekennzeichnet, dass** zu einem Vereinbarungszeitpunkt von dem an einem Vereinbarungsort (38) befindlichen Fahrzeug (2, 20) bei der Ladestation (11, 24) eine Menge an elektrischer Energie angefordert wird, wobei mitgeteilt wird, wieviel elektrische Energie von der Batterie (4, 32) benötigt wird, wobei ein Ladezeitpunkt vereinbart wird, zu dem der Empfänger (6, 6a, 6b, 28) des Fahrzeugs (2, 20) während einer Fortsetzung seiner Fahrt an einem Ladeort (40) maximal einen Sollabstand zu der Quelle (12, 26) aufweisen wird, wobei, sobald das Fahrzeug (2, 20) zu dem vorgesehenen Ladezeitpunkt den Ladeort (40) erreicht und der Empfänger (6, 6a, 6b, 28) maximal den Sollabstand zu der Quelle (12, 26) aufweist, von der Quelle (12, 26) der Blitz (16, 30) mit der vereinbarten Menge an elektrischer Energie erzeugt, zu dem Empfänger (6, 6a, 6b, 28) über die Luft transportiert und von dem Empfänger (6, 6a, 6b, 28) empfangen wird.

2. Verfahren nach Anspruch 1, das bei einer Fahrt des Fahrzeugs (2, 20) durchgeführt wird, wenn das Fahrzeug (2, 20) die mindestens eine Quelle (12, 26) passiert, wobei der mindestens eine Empfänger (6, 6a, 6b, 28) zu der mindestens einen Quelle (12, 26) maximal den Sollabstand aufweist.

3. Verfahren nach Anspruch 1 oder 2, bei dem der Ladestation (11, 24) vor einem Erzeugen des mindestens einen Blitzes (16, 30) von dem Fahrzeug (2, 20) über eine Kommunikationsverbindung eine Information über die bereitzustellende Menge an elektrischer Energie bereitgestellt wird.

4. System zum Laden einer Batterie (4, 32) eines Fahrzeugs (2, 20) mit elektrischer Energie, das eine Ladestation (11, 24) aufweist, die mindestens eine Quelle (12, 26) zum Erzeugen von elektrischen Blitzen (16, 30) aufweist, wobei die mindestens eine Quelle (12, 26) dazu ausgebildet ist, mindestens einen Blitz (16, 30) zu erzeugen, der mindestens einem Empfänger (6, 6a, 6b, 28) des Fahrzeugs (2, 20) eine Menge an elektrischer Energie über die Luft bereitstellt, wobei der mindestens eine Empfänger (6, 6a, 6b, 28) dazu ausgebildet ist, die empfangene Menge an elektrischer Energie der Batterie (4, 32) bereitzustellen, **dadurch gekennzeichnet, dass** zu einem Vereinbarungszeitpunkt von dem an einem Vereinbarungsort (38) befindlichen Fahrzeug (2, 20) bei der Ladestation (11, 24) eine Menge an elektrischer Energie angefordert wird, wobei mitgeteilt wird, wieviel elektrische Energie von der Batterie (4, 32) benötigt wird, wobei ein Ladezeitpunkt vereinbart wird, zu dem der Empfänger (6, 6a, 6b, 28) des Fahrzeugs (2, 20) während einer Fortsetzung seiner Fahrt an einem Ladeort (40) maximal einen Sollabstand zu der Quelle (12, 26) aufweisen wird, wobei, sobald das Fahrzeug (2, 20) zu dem vorgesehenen Ladezeitpunkt den Ladeort (40) erreicht und der Empfänger (6, 6a, 6b, 28) maximal den Sollabstand zu der Quelle (12, 26) aufweist, von der Quelle (12, 26) der Blitz (16, 30) mit der vereinbarten Menge an elektrischer Energie erzeugt, zu dem Empfänger (6, 6a, 6b, 28) über die Luft transportiert und von dem Empfänger (6, 6a, 6b, 28) empfangen wird.

5. System nach Anspruch 4, bei dem die mindestens eine Quelle (12, 26) als Teslaspule ausgebildet ist.

6. System nach Anspruch 4 oder 5, das den mindestens einen Empfänger (6, 6a, 6b, 28) aufweist, der an einer Außenwand des Fahrzeugs (2, 20) angeordnet und als Antenne, Blitzableiter und/oder Teil einer Karosserie des Fahrzeugs (2, 20) ausgebildet ist.

7. System nach einem der Ansprüche 4 bis 6, das mindestens einen Transformator (8, 37) aufweist, der in dem Fahrzeug (2, 20) angeordnet und dazu ausgebildet ist, einen Wert mindestens eines elektrischen Parameters, bspw. einer Spannung und/oder eines Stroms, der über den Blitz (16, 30) empfangenen Menge an elektrischer Energie zu transformieren und der Batterie (4, 32) bereitzustellen.

8. System nach einem der Ansprüche 4 bis 7, das ein Kommunikationsmodul (36), das der Ladestation (11, 24) zugeordnet ist, und ein weiteres Kommunikationsmodul (34), das in dem Fahrzeug (2, 20) angeordnet ist, aufweist.

9. System nach einem der Ansprüche 4 bis 8, bei dem die mindestens eine Quelle (12, 26) der Ladestation (11, 24) neben und/oder über einer Fahrbahn (22) für das Fahrzeug (2, 20) angeordnet ist.

## Claims

1. Method for charging a battery (4, 32) of a vehicle (2, 20) with electrical energy with a charging station (11, 24), which comprises at least one source (12, 26) for generating electrical flashes (16, 30), wherein at least one flash (16, 30) is generated by the at least one source (12, 26), with which an amount of electrical energy is provided via the air to at least one receiver (6, 6a, 6b, 28) of the vehicle (2, 20), wherein the received amount of electrical energy is provided to the battery (4, 32) by the at least one receiver (6, 6a, 6b, 28), **characterised in that** an amount of electrical energy is requested at the charging station (11, 24) at an agreed time by the vehicle (2, 20) located at an agreed location (38), wherein it is communicated how much electrical energy is required by the battery (4, 32), wherein a charging time is agreed, at which the receiver (6, 6a, 6b, 28) of the vehicle will have at most a target distance to the source (12, 26) at a charging location (40) during a continuation of its journey, wherein as soon as the vehicle (2, 20) reaches the charging location (40) at the provided charging time and the receiver (6, 6a, 6b, 28) has at most the target distance to the source (12, 26), the flash (16, 30) having the agreed amount of electrical energy is generated by the source (12, 26), is transported to the receiver (6, 6a, 6b, 28) via the air, and is received by the receiver (6, 6a, 6b, 28).

2. Method according to claim 1, which is carried out during a journey of the vehicle (2, 20) when the vehicle (2, 20) passes the at least one source (12, 26), wherein the at least one receiver (6, 6a, 6b, 28) has at most the target distance to the at least one source (12, 26).

3. Method according to claim 1 or 2, wherein the charging station (11, 24) before generating the at least one flash (16, 30) is provided with information about the amount of electrical energy to be provided by the vehicle (2, 20) via a communication connection.

4. System for charging a battery (4, 32) of a vehicle (2, 20) with electrical energy which comprises a charging station (11, 24), which has at least one source (12, 26) for generating electrical flashes (16, 30), wherein the at least one source (12, 26) is configured to generate at least one flash (16, 30) which provides an amount of electrical energy via the air to at least one receiver (6, 6a, 6b, 28) of the vehicle (2, 20), wherein the at least one receiver (6, 6a, 6b, 28) is designed to provide the received amount of electrical energy to the battery (4, 32), **characterised in that** an amount of electrical energy is requested at the charging station (11, 24) at an agreed time by the vehicle (2, 20) located at an agreed location (38), wherein it is communicated how much electrical energy is required by the battery (4, 32), wherein a charging time is agreed, at which the receiver (6, 6a, 6b, 28) of the vehicle (2, 20) will have at most a target distance to the source (12, 26) at a charging location (40) during a continuation of its journey, wherein as soon as the vehicle (2, 20) reaches the charging location (40) at the provided charging time and the receiver (6, 6a, 6b, 28) has at most the target distance to the source (12, 26), the flash (16, 30) having the agreed amount of electrical energy is generated by the source (12, 26), is transported to the receiver (6, 6a, 6b, 28) via the air, and is received by the receiver (6, 6a, 6b, 28).

5. System according to claim 4, wherein the at least one source (12, 26) is designed as a Tesla coil.

6. System according to claim 4 or 5, which comprises the at least one receiver (6, 6a, 6b, 28) which is arranged on an outer wall of the vehicle (2, 20) and is designed as an antenna, lightning conductor and/or part of a vehicle body of the vehicle (2, 20).

7. System according to any one of claims 4 to 6, which comprises at least one transformer (8, 37) which is arranged in the vehicle (2, 20) and is designed to transform a value of at least one electrical parameter, for example a voltage and/or a current, of the amount of electrical energy received via the flash (16, 30) and to provide it to the battery (4, 32).

8. System according to any one of claims 4 to 7, which comprises a communication module (36) which is associated with the charging station (11, 24), and a further communication module (34) which is arranged in the vehicle (2, 20).

9. System according to any one of claims 4 to 8, wherein the at least one source (12, 26) of the charging station (11, 24) is arranged adjacent to and/or above a roadway (22) for the vehicle (2, 20).

## Revendications

1. Procédé pour charger une batterie (4, 32) d'un véhicule (2, 20) avec de l'énergie électrique à l'aide d'une station de charge (11, 24), qui présente au moins une source (12, 26) pour générer des éclairs électriques (16, 30), dans lequel au moins un éclair (16, 30) est généré avec l'au moins une source (12, 26), avec lequel une quantité d'énergie électrique est fournie par voie aérienne à l'au moins un récepteur (6, 6a, 6b, 28) du véhicule (2, 20), dans lequel la quantité d'énergie électrique est fournie à la batterie (4, 32) par l'au moins un récepteur (6, 6a, 6b, 28), **caractérisé en ce qu'**à un moment convenu, le véhicule (2, 20) se trouvant à un emplacement convenu (38) demande une quantité d'énergie électrique à la station de charge (11, 24), dans lequel la quantité d'énergie électrique requise de la batterie (4, 32) est signalée, dans lequel un moment de charge est convenu, auquel le récepteur (6, 6a, 6b, 28) du véhicule (2, 20) présente au maximum une distance de consigne par rapport à la source (12, 26) pendant une poursuite de son trajet à un emplacement de charge (40), dans lequel, dès que le véhicule (2, 20) atteint l'emplacement de charge (40) au moment de charge prévu et que le récepteur (6, 6a, 6b, 28) présente au maximum la distance de consigne par rapport à la source (12, 26), l'éclair (16, 30) est généré par la source (12, 26) avec la quantité convenue d'énergie électrique, transportée par voie aérienne vers le récepteur (6, 6a, 6b, 28) et reçue par le récepteur (6, 6a, 6b, 28).

2. Procédé selon la revendication 1, qui est mis en oeuvre lors d'un trajet du véhicule (2, 20) lorsque le véhicule (2, 20) passe devant l'au moins une source (12, 26), dans lequel l'au moins un récepteur (6, 6a, 6b, 28) est au maximum à la distance de consigne de l'au moins une source (12, 26).

3. Procédé selon la revendication 1 ou 2, dans lequel, avant une génération de l'au moins un éclair (16, 30) par le véhicule (2, 20), une information sur la quantité d'énergie électrique à fournir est fournie à la station de charge (11, 24) par l'intermédiaire d'une liaison de communication.

4. Système pour charger une batterie (4, 32) d'un véhicule (2, 20) avec de l'énergie électrique, qui présente une station de charge (11, 24), qui présente au moins une source (12, 26) pour générer des éclairs électriques (16, 30), dans lequel l'au moins une source (12, 26) est conçue pour générer au moins un éclair (16, 30), qui fournit une quantité d'énergie électrique à au moins un récepteur (6, 6a, 6b, 28) du véhicule (2, 20) par voie aérienne, dans lequel l'au moins un récepteur (6, 6a, 6b, 28) est conçu pour fournir la quantité d'énergie électrique reçue à la batterie (4, 32), **caractérisé en ce qu'**à un moment convenu, le véhicule (2, 20) se trouvant à un emplacement convenu (38) demande une quantité d'énergie électrique à la station de charge (11, 24), dans lequel la quantité d'énergie électrique requise de la batterie (4, 32) est signalée, dans lequel un moment de charge est convenu, auquel le récepteur (6, 6a, 6b, 28) du véhicule (2, 20) présente au maximum une distance de consigne par rapport à la source (12, 26) pendant une poursuite de son trajet à un emplacement de charge (40), dans lequel, dès que le véhicule (2, 20) atteint l'emplacement de charge (40) au moment de charge prévu et que le récepteur (6, 6a, 6b, 28) présente au maximum la distance de consigne par rapport à la source (12, 26), l'éclair (16, 30) est généré par la source (12, 26) avec la quantité convenue d'énergie électrique, transportée par voie aérienne vers le récepteur (6, 6a, 6b, 28) et reçue par le récepteur (6, 6a, 6b, 28).

5. Système selon la revendication 4, dans lequel l'au moins une source (12, 26) est conçue en tant que bobine Tesla.

6. Système selon la revendication 4 ou 5, qui présente l'au moins un récepteur (6, 6a, 6b, 28) qui est disposé sur une paroi extérieure du véhicule (2, 20) et qui est conçu en tant qu'antenne, paratonnerre et/ou partie d'une carrosserie du véhicule (2, 20).

7. Système selon l'une quelconque des revendications 4 à 6, qui présente au moins un transformateur (8, 37), qui est disposé dans le véhicule (2, 20) et qui est conçu pour fournir une valeur d'au moins un paramètre électrique, par exemple une tension et/ou un courant, pour transformer la quantité d'énergie électrique reçue par l'intermédiaire de l'éclair (16, 30) et la fournir à la batterie (4, 32).

8. Système selon l'une quelconque des revendications 4 à 7, qui présente un module de communication (36) associé à la station de charge (11, 24) et un module de communication (34) supplémentaire qui est disposé dans le véhicule (2, 20).

9. Système selon l'une quelconque des revendications 4 à 8, dans lequel l'au moins une source (12, 26) de la station de charge (11, 24) est disposée à côté et/ou au-dessus d'une voie (22) pour le véhicule (2, 20).
